# DEMANDE DE BREVET EUROPEEN

(11) **EP 1 038 438 A1**
(43) Date de publication de la demande: **27.09.2000**
(21) Numéro de dépôt: 00420040.8
(22) Date de dépôt: 02.03.2000
(51) Int. Cl.: A01K 89/01

(54) **Moulinet de peche à bobine débrayable et avertisseur électronique.**

(30) Priorité: 19.03.1999 FR 9903558
(71) Demandeur: Mitchell Sports, 74970 Marignier (FR)
(72) Inventeur: Bernard, Jean, 74950 Scionzier (FR); Plestan, Alain, 74440 Mieussy (FR); Grammont, Francois, 25115 Pouilley les Vignes (FR)
(74) Mandataire: Poncet, Jean-François

(57) **Abrégé**

Le moulinet comprend une source auxiliaire d'énergie (19) électrique connectée à des pistes superficielles périphériques conductrices prévues dans un tronçon d'extrémité (20) de l'arbre support de bobine (7). Un capteur de rotation relative (16) comprend des conducteurs de sortie en contact glissant sur les pistes conductrices du tronçon d'extrémité (20), qui reçoivent alternativement le potentiel de la borne positive ou de la borne négative de la source auxiliaire d'énergie (19) électrique lors de la rotation de la bobine (6) autour de son arbre support de bobine (7). Le signal présent sur les conducteurs de sortie est utilisé pour générer des signaux sonores sur un transducteur piézo-électrique (117), et/ou des signaux lumineux sur une ou plusieurs diodes électroluminescentes (118). La source auxiliaire d'énergie (19) électrique, le capteur de rotation relative (16) et les moyens de génération de signaux (117, 118) sont contenus dans un couvercle rapporté (46) interchangeable fermant la face frontale de la bobine (6).

## Description

La présente invention concerne les moulinets pour canne à pêche, du type à bobine fixe et récupérateur rotatif de fil. L'invention s'applique plus spécialement à de tels moulinets dont la réserve de fil, appelée "bobine", est une pièce sensiblement de révolution constituée de deux flasques étendus radialement et réunis par un moyeu cylindrique s'étendant axialement d'un flasque à l'autre. Cette bobine est adaptée à l'extrémité antérieure d'un arbre support de bobine monté lui-même rotatif dans le boîtier de moulinet et sollicité par un frein arrière. Le moulinet comprend un boîtier de moulinet, avec un mécanisme d'entraînement en rotation pour entraîner le récupérateur de fil ou "tambour" autour de l'arbre support de bobine, et un mécanisme d'entraînement en translation axiale pour entraîner en translation axiale alternative l'arbre support de bobine. Les mécanismes d'entraînement sont sollicités par une manivelle accessible par l'utilisateur.

Lors de la pêche au lancer, pour l'étape de récupération du fil, le récupérateur de fil enroule le fil sur la bobine. On peut limiter la tension du fil et la régler par un réglage du frein arrière qui commande le couple résistant entre l'arbre support de bobine et le boîtier du moulinet. Lorsque le fil est tiré selon une tension supérieure à une valeur déterminée, le frein arrière autorise la rotation de l'arbre support de bobine et de la bobine en opposant une résistance fonction du serrage du frein.

Lors de la pêche au poser, on pose la canne sur un support, et on doit autoriser le dévidement libre de fil lorsque le poisson a mordu. Dans ces conditions, avec un moulinet à frein arrière dans lequel la bobine n'est pas débrayable sur l'arbre support de bobine, on doit régler le couple de freinage de frein arrière à son minimum, pour que le maintien du fil soit juste suffisant pour résister au courant de la rivière ou au vent. Mais il est alors peu commode et peu rapide de régler à nouveau le couple de freinage du frein arrière avant le ferrage, car cela nécessite une manoeuvre longue et contraignante du frein arrière.

Pour permettre d'utiliser un tel moulinet à frein arrière tant pour la pêche au lancer que pour la pêche au poser, on a proposé, notamment dans le document FR 2 650 732 A, de prévoir des moyens d'accouplement débrayables de la bobine sur l'arbre support de bobine. Les moyens d'accouplement débrayables peuvent prendre un état embrayé dans lequel la bobine est solidaire en rotation de l'arbre support de bobine, et un état débrayé dans lequel la bobine est libre en rotation par rapport à l'arbre support de bobine. Des moyens permettent éventuellement d'assurer un réaccouplement automatique de la bobine sur son arbre support de bobine, produisant la solidarisation en rotation de la bobine sur son arbre dès que le pêcheur reprend en main le moulinet pour récupérer le fil en actionnant sa manivelle.

Le document FR 2 650 732 A décrit également un dispositif de freinage auxiliaire permettant de régler un couple de freinage entre la bobine et l'arbre support de bobine lorsque les moyens d'accouplement débrayables de la bobine sont en position débrayée. Ce dispositif comporte une tige élastique articulée sur un pivot axial de la bobine et dont une extrémité vient frotter sur les extrémités dépassantes d'une clavette radiale solidaire de l'arbre support de bobine. Par ce frottement, la tige élastique assure à la fois un couple de freinage de la bobine, et un effet de bruiteur pour prévenir le pêcheur lorsque la bobine se met à tourner.

Un problème est que ce bruiteur mécanique introduit nécessairement un couple de freinage de la bobine sur l'arbre support de bobine, freinage qui est incompatible avec certains types de pêche dans lesquels on demande que le couple minimum de freinage de la bobine sur l'arbre de bobine induise une tension de fil inférieure à 0,03 newtons environ.

Le document GB 2 248 161 A décrit un moulinet de pêche muni d'un dispositif avertisseur électronique induisant un couple de freinage négligeable sur la bobine. Dans ce document, le capteur de rotation relative de la bobine est constitué par un commutateur reed solidaire du boîtier de moulinet et coopérant avec un aimant logé dans la bobine. Le commutateur est connecté à une source d'énergie électrique logée dans le boîtier de moulinet générant un signal électrique de rotation lors de la rotation relative de la bobine. Un générateur piézo et une diode émettrice sont également logés dans le boîtier de moulinet pour générer un signal sonore et lumineux de rotation de bobine.

Un problème est que cette structure de dispositif avertisseur nécessite de prévoir des moyens particuliers dans le boîtier de moulinet lui-même, de sorte que les moulinets de pêche qui en sont dépourvus ne peuvent être aisément modifiés pour remplir la fonction d'avertisseur électronique.

Un autre problème est que l'un des éléments, à savoir l'aimant, est contenu dans la bobine elle-même, de sorte que ce dispositif nécessite l'usage de bobines particulières comprenant cet aimant. En particulier, la structure est incompatible avec les bobines à réserve de fil interchangeable.

Un objet de la présente invention est de concevoir une nouvelle structure de moulinet de pêche à dispositif avertisseur électronique de rotation de la bobine, dans laquelle le dispositif avertisseur peut être aisément monté et démonté sur des moulinets divers, sans modification du corps de moulinet lui-même.

Un autre objet de l'invention est de permettre de monter et démonter aisément le dispositif avertisseur électronique sur des réserves interchangeables de fil adaptables sur un moyeu antérieur d'un moulinet, permettant de choisir le fil approprié au type de pêche.

Un autre objet de l'invention est de faciliter l'entretien et la maintenance du dispositif avertisseur électronique, notamment pour le changement des piles d'alimentation électriques.

Un autre objet de l'invention est de prévoir un tel dispositif avertisseur électronique qui présente une autonomie satisfaisante, permettant un usage de longue durée, par exemple un usage pendant une année entière dans les conditions normales de pêche, sans intervention de l'utilisateur pour son entretien et sa maintenance.

Un autre objet de l'invention est de prévoir un tel dispositif avertisseur qui assure un fonctionnement entièrement automatique, sans nécessiter aucune intervention de l'utilisateur notamment pour mettre le dispositif en fonctionnement ou à l'arrêt.

Le dispositif avertisseur selon l'invention doit en outre détecter tous les types de mouvement du fil en dévidement hors de la bobine, même les mouvements lents produits par certains poissons en début de touche.

Egalement, un objet de l'invention est de prévoir des moyens permettant de donner au pêcheur une estimation de la vitesse de dévidement du fil hors de la bobine.

Pour atteindre ces objets ainsi que d'autres, un moulinet de pêche selon l'invention comprend, de façon connue :
- un boîtier de moulinet, avec un mécanisme d'entraînement en rotation de tambour et un mécanisme d'entraînement en translation axiale alternative d'arbre sollicités par une manivelle,
- un arbre support de bobine, monté rotatif dans le boîtier de moulinet et freiné en rotation par un frein arrière, et entraîné en translation axiale alternative dans le boîtier de moulinet par le mécanisme d'entraînement en translation axiale alternative d'arbre,
- une bobine adaptée à l'extrémité antérieure de l'arbre support de bobine,
- un tambour de récupération de fil, sollicité en rotation par le mécanisme d'entraînement en rotation de tambour,
- des moyens d'accouplement débrayables de la bobine sur l'arbre support de bobine, ayant un état embrayé dans lequel la bobine est solidaire en rotation de l'arbre support de bobine, et ayant un état débrayé dans lequel la bobine est libre en rotation par rapport à l'arbre support de bobine,
- un capteur de rotation relative, générant un signal électrique de rotation lors de la rotation relative de la bobine par rapport à l'arbre support de bobine,
- un générateur électronique de signal sonore et/ou lumineux alimenté par une source auxiliaire d'énergie, et générant un signal perceptible par l'utilisateur à réception dudit signal électrique de rotation.

Dès lors que le générateur électronique de signal sonore et/ou lumineux tire son énergie d'une source auxiliaire d'énergie, la génération de signal sonore et/ou lumineux ne prélève pas d'énergie mécanique sous forme d'un couple de freinage entre la bobine et l'arbre support de bobine. On peut ainsi réduire considérablement le couple de freinage induit par le dispositif avertisseur.

Selon l'invention, le capteur de rotation relative, la source auxiliaire d'énergie et le générateur du signal sonore et/ou lumineux sont contenus dans un couvercle rapporté interchangeable fermant la face frontale de la bobine.

Ainsi, la bobine elle-même et le corps de moulinet ne comportent aucun des éléments du dispositif avertisseur, de sorte que l'on peut concevoir qu'un tel dispositif avertisseur s'adapte sur des moulinets de structures différentes. Le caractère amovible et interchangeable du couvercle facilite également la maintenance du dispositif avertisseur, par exemple pour une opération d'entretien ou de réparation telle qu'un changement de pile d'alimentation électrique.

Egalement, le même moulinet de pêche peut être utilisé avec ou sans couvercle, au gré des besoins de l'utilisateur.

L'invention s'applique avantageusement à une structure dans laquelle la bobine est adaptée de manière amovible à l'extrémité antérieure de l'arbre support de bobine. En effet, dans ce cas, un même couvercle contenant le dispositif avertisseur électronique peut être adapté sur des bobines différentes constituant des réserves de fils différents que l'utilisateur peut choisir pour s'adapter de façon plus efficace aux conditions de pêche.

Selon un mode de réalisation avantageux :
- l'arbre support de bobine comprend un tronçon d'extrémité ayant au moins deux pistes superficielles périphériques conductrices de l'électricité, isolées électriquement l'une de l'autre et connectées à des potentiels électriques distincts, et réparties en alternance dans une zone superficielle périphérique d'interface selon le pourtour de l'arbre support de bobine,
- le capteur de rotation relative de bobine comprend au moins un conducteur de sortie solidaire de la bobine, en contact glissant sur le pourtour de l'arbre support de bobine dans la zone superficielle périphérique d'interface occupée par les pistes superficielles périphériques conductrices en alternance, et captant alternativement les potentiels distincts des pistes superficielles périphériques conductrices lors d'une rotation relative de la bobine, constituant le signal électrique de rotation.

En pratique, on peut avantageusement prévoir que :
- les bornes respectives positive et négative de la source auxiliaire d'énergie électrique sont connectées respectivement à la première et à la seconde piste superficielle périphérique conductrice par l'intermédiaire de conducteurs d'entrée respectifs en contact glissant avec une zone périphérique continue de la piste superficielle périphérique conductrice respective,
- le conducteur de sortie est connecté à l'entrée du générateur électronique de signal sonore et/ou lumineux.

Une réduction des forces de frottement entre la bobine et l'arbre support de bobine peut être réalisée en prévoyant que les premiers conducteurs d'entrée et de sortie en contact glissant avec l'arbre support de bobine comprennent chacun une bille conductrice de l'électricité, libre en rotation et guidée en coulissement dans des logements radiaux de guidage de la bobine, et sollicitée par des moyens élastiques en appui sur la surface périphérique extérieure de l'arbre support de bobine.

Une réduction de la consommation du dispositif est obtenue en prévoyant que le capteur de rotation relative produit un signal électrique de rotation présentant des fronts de transition lorsque la bobine atteint certaines positions angulaires déterminées autour de l'arbre support de bobine, et le générateur électronique de signal sonore et/ou lumineux produit des signaux perceptibles pendant une durée déterminée après réception de certains au moins des fronts de transition.

Selon une réalisation avantageuse, le générateur électronique de signal sonore et/ou lumineux comprend :
- une bascule monostable générant un signal d'excitation de durée déterminée à réception d'un front de transition positive du signal électrique de rotation reçu du capteur de rotation relative,
- un oscillateur piloté, générant un signal électrique de sortie à fréquence audible pendant la durée du signal d'excitation reçu de la bascule monostable,
- un amplificateur de signaux, mettant en forme les signaux électriques de sortie reçus de l'oscillateur piloté et les transmettant à une source de signal lumineux et/ou à une source de signal sonore.

D'autres objets, caractéristiques et avantages de la présente invention ressortiront de la description suivante de modes de réalisation particuliers, faite en relation avec les figures jointes, parmi lesquelles:
- la figure 1 est une vue de côté, en coupe partielle, illustrant une structure de moulinet de pêche selon un mode de réalisation de la présente invention ;
- la figure 2 est une vue de côté en coupe longitudinale de la portion antérieure du moulinet de la figure 1, permettant de distinguer la structure interne de la bobine engagée sur l'arbre support de bobine ;
- la figure 3 est une vue de côté en coupe longitudinale à plus grande échelle de la portion d'extrémité antérieure de la bobine de la figure 2 ;
- la figure 4 est une vue schématique en perspective montrant la structure générale du capteur de rotation relative selon un mode de réalisation de la présente invention ;
- la figure 5 est une vue éclatée de la portion d'extrémité antérieure de l'arbre support de bobine pour constitution du capteur de rotation relative de la figure 4 ;
- la figure 6 est une vue schématique de côté du capteur de rotation relative de la figure 4 ;
- la figure 7 est une coupe transversale du capteur de la figure 6 selon le plan C-C ;
- la figure 8 est une coupe transversale du capteur de la figure 6 selon le plan D-D ;
- la figure 9 est une vue de la face intérieure d'un couvercle d'extrémité de bobine, formant l'extrémité antérieure de la bobine de la figure 2 ;
- la figure 10 est une vue de face intérieure en coupe transversale du couvercle d'extrémité de bobine selon le plan E-E de la figure 2 ;
- la figure 11 est une vue de face en coupe transversale du couvercle d'extrémité de bobine selon le plan F-F de la figure 2 ;
- la figure 12 est un schéma de principe du générateur de signaux sonores et/ou lumineux selon un mode de réalisation de la présente invention ; et
- la figure 13 illustre les formes d'onde des signaux électriques en différents points du schéma électrique de la figure 12.

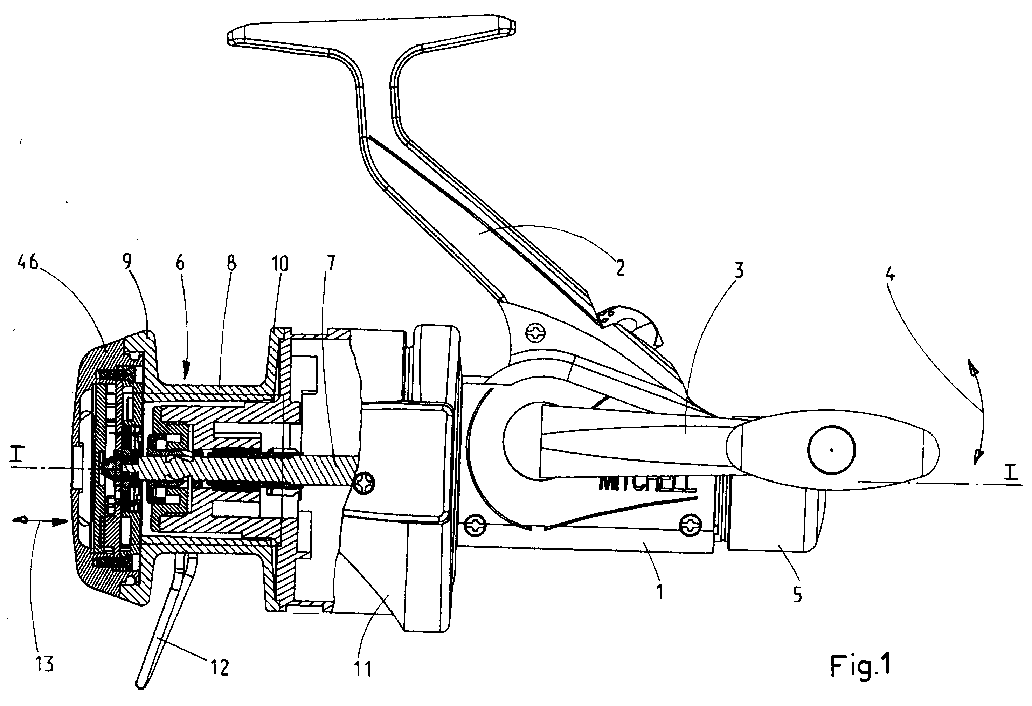

La figure 1 représente un moulinet de pêche selon un mode de réalisation de la présente invention, illustré en vue de côté dans laquelle on a effectué une coupe longitudinale de la partie antérieure de moulinet.

Un tel moulinet comprend un boîtier de moulinet 1, généralement orienté selon un axe longitudinal I-I, et comportant un pied 2 adapté pour sa fixation à une canne à pêche elle-même orientée longitudinalement parallèlement à l'axe longitudinal I-I. Une manivelle 3 est montée rotative sur le boîtier de moulinet 1 selon un axe transversal, et peut être sollicitée en rotation par l'utilisateur comme illustré par la flèche 4. Un frein arrière 5, dont on distingue le bouton d'actionnement, est prévu dans le boîtier de moulinet 1 pour être accessible par l'utilisateur depuis l'arrière du moulinet.

En partie antérieure du moulinet, on distingue une bobine 6, adaptée de manière amovible à l'extrémité antérieure 15 d'un arbre support de bobine 7 tenu dans le boîtier de moulinet 1 et dépassant vers l'avant en étant orienté selon l'axe longitudinal I-I. La bobine 6 comprend un moyeu cylindrique 8 reliant un flasque antérieur 9 et un flasque postérieur 10 pour constituer une gorge dans laquelle peut être enroulé le fil de pêche.

Un tambour 11 de récupération de fil est monté rotatif sur le boîtier de moulinet 1 selon l'axe longitudinal I-I, disposé entre le boîtier de moulinet 1 et la bobine 6. Le tambour 11 porte un arceau 12 de récupération de fil, qui peut guider le fil de pêche pour l'enrouler sur la bobine 6 lors de la rotation du tambour 11.

Le boîtier de moulinet 1 contient un mécanisme d'entraînement en rotation du tambour 11 et un mécanisme d'entraînement en translation axiale alternative de l'arbre support de bobine 7. Ces deux mécanismes, non visibles sur la figure 1, sont des mécanismes bien connus de l'homme du métier, par exemple tels qu'utilisés dans tous les moulinets de pêche à bobine fixe et récupérateur rotatif de fil, de sorte qu'ils ne seront pas décrits de façon plus précise. Les mécanismes d'entraînement sont sollicités par la manivelle 3.

L'arbre support de bobine 7 est monté rotatif dans le boîtier de moulinet 1 selon l'axe longitudinal I-I, et freiné en rotation par le frein arrière 5. Il est simultanément entraîné en translation axiale alternative par le mécanisme d'entraînement en translation axiale d'arbre, comme illustré par la flèche 13, par la rotation de la manivelle 3.

Dans le mode de réalisation illustré sur les figures 1 à 3, la bobine 6 est formée de façon générale d'une réserve extérieure de fil comportant le moyeu cylindrique 8 et les deux flasques 9 et 10, la réserve extérieure de fil étant rapportée sur un noyau central 14 lui-même monté sur l'arbre support de bobine 7.

La bobine 6 est accouplée sur l'arbre support de bobine 7 par des moyens d'accouplement débrayables, permettant un état embrayé dans lequel la bobine 6 est solidaire en rotation de l'arbre support de bobine 7, et un état débrayé dans lequel la bobine 6 est libre en rotation par rapport à l'arbre support de bobine 7.

Par exemple, les moyens d'accouplement débrayables sont identiques ou similaires à ceux décrits dans le document FR 2 650 732 A, dans lesquels l'arbre support de bobine 7 comprend deux gorges annulaires 70 et 71 dans lesquelles peut s'engager une clavette élastique solidaire de la bobine 6 et non représentée sur les figures, permettant de donner sélectivement à la bobine 6 deux positions axiales distinctes ; dans une première position axiale, la bobine est en prise sur des moyens de blocage en rotation solidaires de l'arbre support de bobine 7, tandis que dans la seconde position axiale la bobine 6 est dégagée des moyens de blocage en rotation pour son débrayage. Pour plus de détails, notamment pour prévoir des moyens de réaccouplement automatique de la bobine 6 sur l'arbre support de bobine 7, on pourra se reporter à la description complète du document FR 2 650 732 A.

Selon l'invention, le moulinet comprend en outre un capteur de rotation relative 16, générant un signal électrique de rotation lors de la rotation relative de la bobine 6 par rapport à l'arbre support de bobine 7. Un générateur électronique de signal sonore 17 et/ou un générateur électronique de signal lumineux 18, alimenté par une source auxiliaire d'énergie 19, génère un signal perceptible par l'utilisateur à réception dudit signal électrique de rotation produit par le capteur de rotation relative 16.

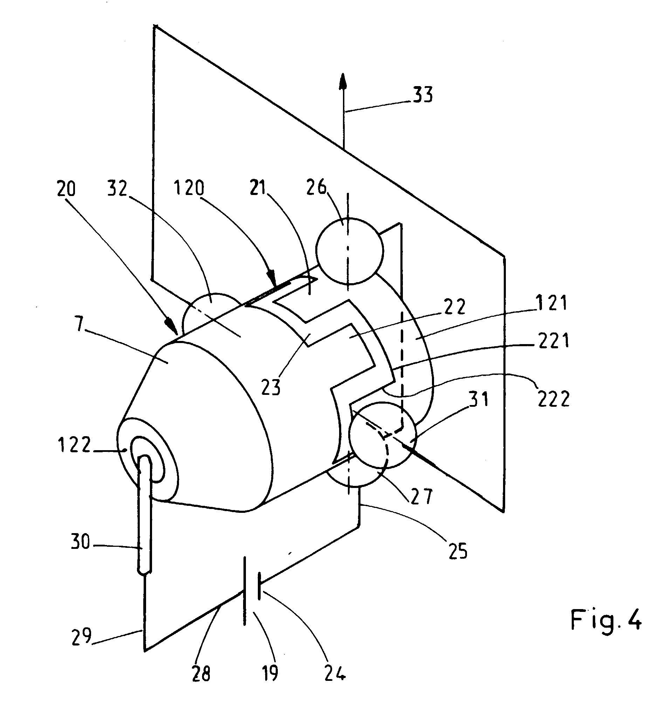

Dans le mode de réalisation illustré sur les figures 4 à 8, le tronçon d'extrémité 20 de l'arbre support de bobine 7 comprend au moins deux pistes superficielles périphériques conductrices de l'électricité, isolées électriquement l'une de l'autre. Sur la figure 4, on distingue une première piste superficielle périphérique 21, et une seconde piste superficielle périphérique 22 isolée de la première piste superficielle périphérique 21 par une bande isolante 23.

La première piste superficielle périphérique 21 est à un premier potentiel électrique, par le fait qu'elle est connectée à la borne négative 24 d'une source auxiliaire d'énergie 19 par un conducteur de liaison 25 et deux premiers conducteurs d'entrée 26 et 27 diamétralement opposés. Les premiers conducteurs d'entrée 26 et 27 sont en contact glissant sur une zone périphérique continue 121 de la première piste superficielle périphérique 21.

La seconde piste superficielle périphérique 22 est à un second potentiel électrique différent, par le fait qu'elle est connectée à la borne positive 28 de la source auxiliaire d'énergie 19 par un conducteur de liaison 29 et un conducteur d'entrée tel qu'une languette 30 métallique en contact avec une zone continue 122 de la deuxième piste superficielle périphérique 22, avantageusement une partie frontale de zone continue 122.

Comme on le voit notamment sur la figure 4, la zone superficielle périphérique d'interface 120 entre la première piste superficielle périphérique 21 et la seconde piste superficielle périphérique 22 est sinueuse, constituant une zone occupée par les pistes superficielles périphériques 21 et 22 conductrices en alternance. En pratique, le bord antérieur 221 de la première piste superficielle périphérique 21 forme des créneaux qui s'imbriquent dans des créneaux similaires formés par le bord postérieur 222 de la seconde piste superficielle périphérique 22, les deux bords 221 et 222 étant séparés l'un de l'autre par la bande isolante 23.

Ainsi, dans la zone superficielle périphérique d'interface 120, les pistes superficielles périphériques 21 et 22 sont réparties en alternance selon le pourtour de l'arbre support de bobine 7.

Le capteur de rotation relative 16 comprend deux conducteurs de sortie 31 et 32, diamétralement opposés, qui viennent en contact glissant sur le pourtour de l'arbre support de bobine 7 dans ladite zone superficielle périphérique d'interface 120 occupée par les pistes superficielles périphériques 21 et 22 conductrices en alternance, et sont connectés à un conducteur de liaison de sortie 33.

Dans la réalisation illustrée sur la figure 4, les premiers conducteurs d'entrée 26 et 27 et les conducteurs de sortie 31 et 32 comprennent chacun une bille conductrice de l'électricité, libre en rotation et retenue en position angulaire fixe par rapport à la bobine du moulinet. Ainsi, les conducteurs de sortie 31 et 32 et le conducteur de liaison de sortie 33 permettent de capter alternativement les potentiels distincts des pistes superficielles périphériques 21 et 22 conductrices lors d'une rotation relative de la bobine autour de l'arbre support de bobine 7.

En pratique, les billes conductrices de l'électricité formant les premiers conducteurs d'entrée 26 et 27 et les conducteurs de sortie 31 et 32 sont chacune guidées dans des logements ou guides radiaux de la bobine 6 et sollicitées par des moyens élastiques pour rester en appui sur la surface périphérique extérieure de l'arbre support de bobine 7. Les billes peuvent rouler sur la surface périphérique extérieure de l'arbre support de bobine 7, diminuant ainsi encore les frottements et couples de freinage entre la bobine 6 et l'arbre support de bobine 7.

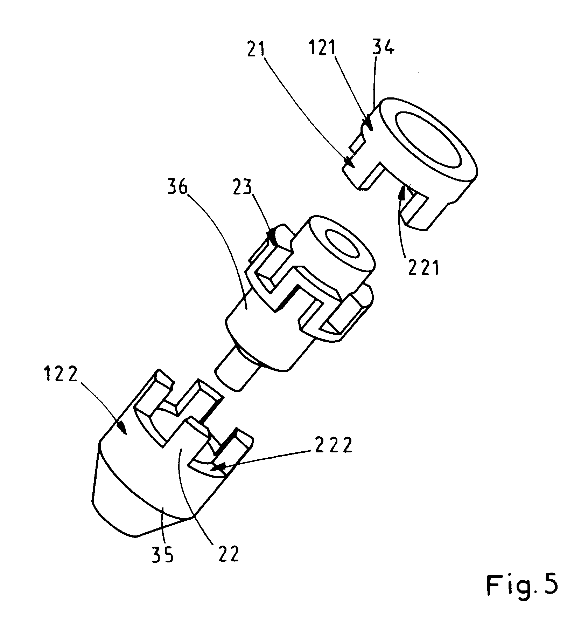

En pratique, le tronçon d'extrémité 20 de l'arbre support de bobine 7 peut être formé de l'assemblage de trois pièces tel qu'illustré sur la figure 5, à savoir une pièce postérieure conductrice 34 destinée à constituer la première piste superficielle périphérique 21, une pièce antérieure conductrice 35 destinée à constituer la deuxième piste superficielle périphérique 22, et une pièce intermédiaire isolante 36 sur laquelle viennent s'emboîter les deux pièces conductrices 34 et 35.

On peut également réaliser la pièce intermédiaire isolante 36 par surmoulage en matière plastique des pièces conductrices 34 et 35.

Le tronçon d'extrémité 20 est ensuite rapporté sur le corps d'arbre support de bobine 7.

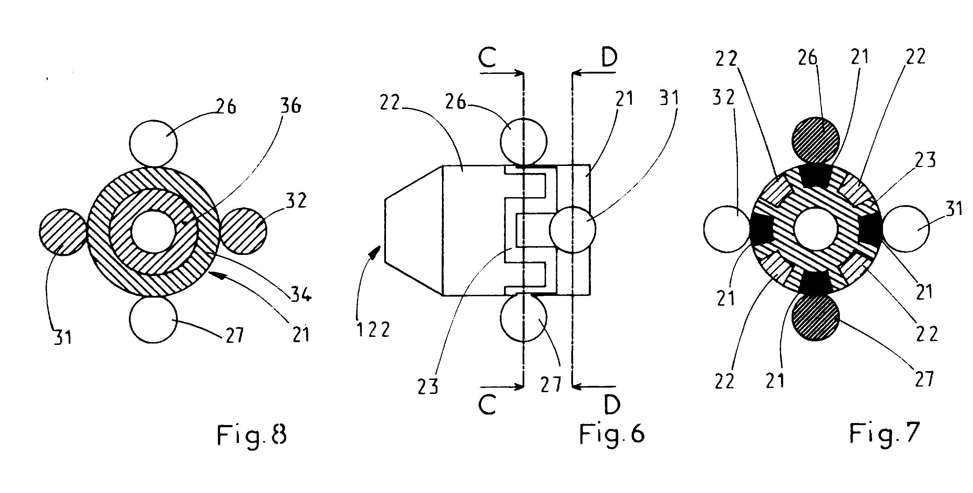

On retrouve, sur les figures 6 à 8, la première piste superficielle périphérique 21 et la seconde piste superficielle périphérique 22 isolées l'une de l'autre par la bande isolante 23, avec les premiers conducteurs d'entrée 26 et 27, les conducteurs de sortie 31 et 32.

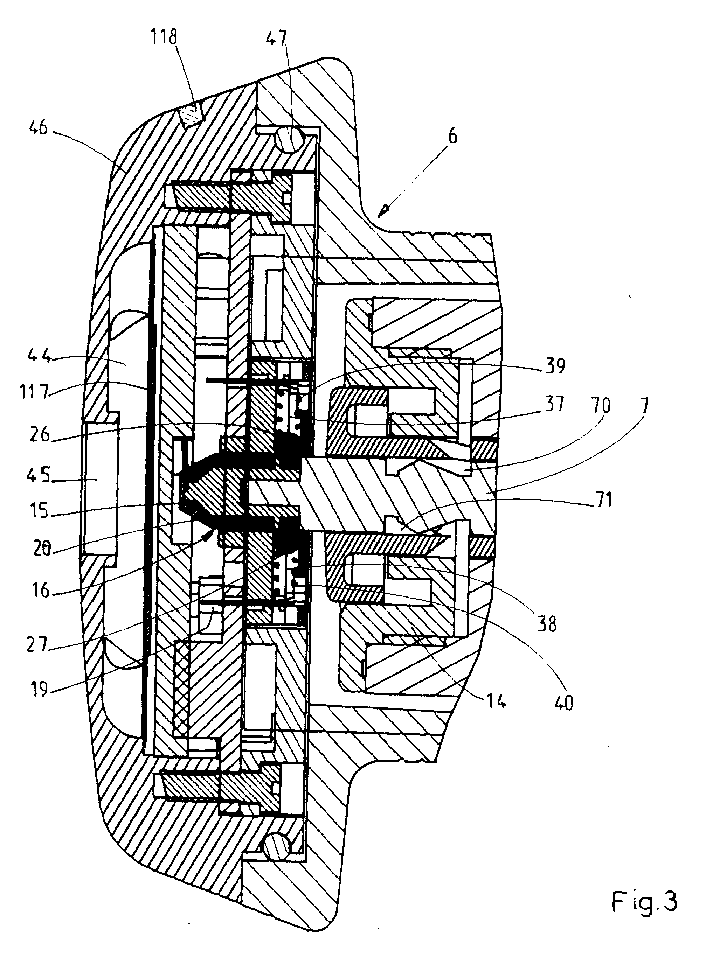

On peut distinguer, sur la figure 3, les deux premiers conducteurs d'entrée 26 et 27 engagés chacun dans un logement radial de guidage respectif 37 ou 38 de la bobine 6 et repoussés par un ressort hélicoïdal respectif 39 ou 40. Une structure similaire est prévue pour le guidage des conducteurs de sortie 31 et 32.

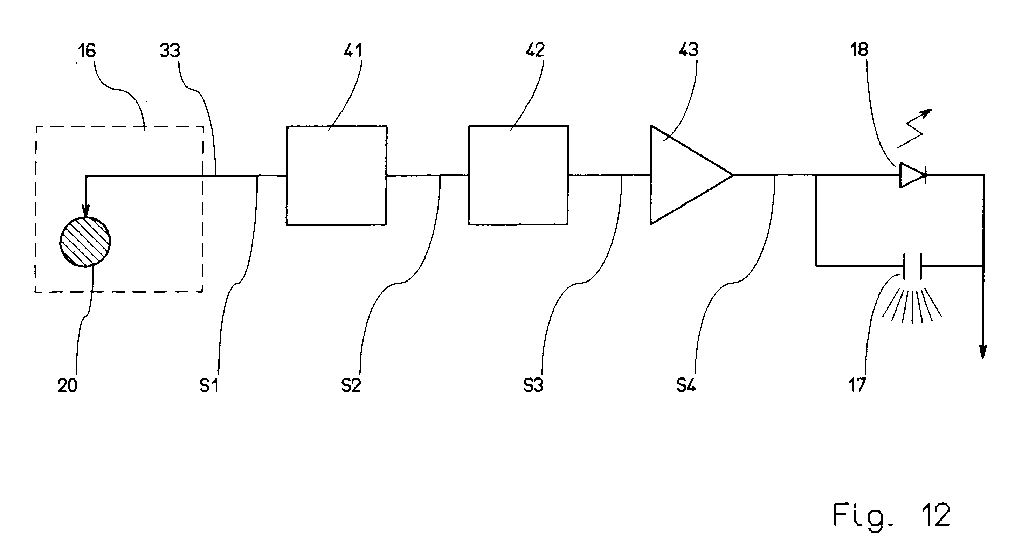

On se référera maintenant à la figure 12, illustrant une structure de générateur électronique de signal sonore et/ou lumineux selon un mode de réalisation de l'invention. On a représenté schématiquement sur la figure le capteur de rotation relative 16, associé au tronçon d'extrémité 20 de l'arbre support de bobine, et fournissant sur le conducteur de liaison de sortie 33 un signal électrique de rotation S1. Une bascule monostable 41 reçoit le signal électrique de rotation S1 et génère un signal d'excitation S2 de durée D constante à réception d'un front de transition positive du signal électrique de rotation S1 reçu du capteur de rotation relative 16.

Un oscillateur piloté 42, connecté à la sortie de la bascule monostable 41, génère un signal électrique de sortie S3 à fréquence F audible pendant la durée D du signal d'excitation S2 reçu de la bascule monostable 41.

Un amplificateur de signaux 43 met en forme les signaux électriques de sortie S3 reçus de l'oscillateur piloté 42 et les transmet sous forme de signaux amplifiés S4 à une source de signal lumineux 118 et/ou à une source de signal sonore 117. La source de signal lumineux 118 peut avantageusement comprendre au moins une diode électroluminescente, disposée en périphérie de la bobine 6 comme illustré sur la figure 3.

La source de signal sonore 117 peut avantageusement être un transducteur piézo-électrique à membrane oscillante logée dans une cavité frontale 44 de la bobine 6, ladite cavité frontale 44 ayant une ouverture antérieure 45.

Comme on le voit en détail sur cette même figure 3, on voit que le capteur de rotation relative 16, la source auxiliaire d'énergie 19, les contacts tels que les conducteurs d'entrée 26 et 27, les conducteurs de sortie non représentés, le générateur de signal lumineux 18 avec la source de signal lumineux 118, et/ou le générateur de signal sonore 17 avec la source de signal sonore 117 sont contenus dans un couvercle rapporté 46 interchangeable fermant la face frontale de la bobine 6 sur laquelle il est engagé en force avec interposition d'un joint annulaire d'étanchéité 47.

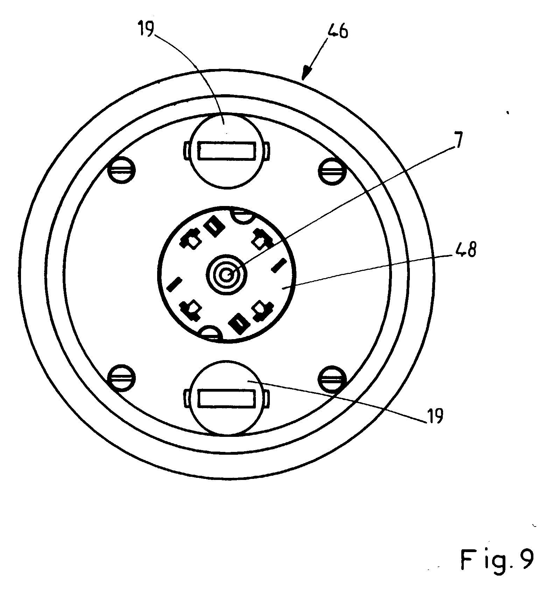

Les figures 9 à 11 illustrent un mode de réalisation d'un tel couvercle rapporté 46. Sur la figure 9, on distingue la face intérieure du couvercle rapporté 46, ou face orientée vers la droite sur la figure 3. Sur cette face intérieure apparaissent la source auxiliaire d'énergie 19, sous forme de deux piles boutons diamétralement opposées pour l'équilibrage de la bobine, et un sous-ensemble central 48 contenant les guidages radiaux des premiers conducteurs d'entrée ou de sortie.

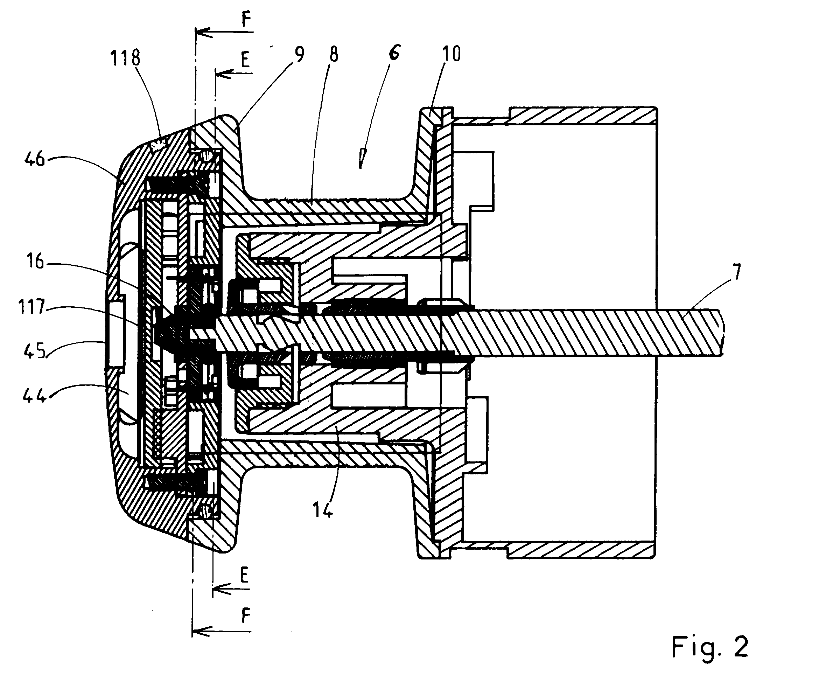

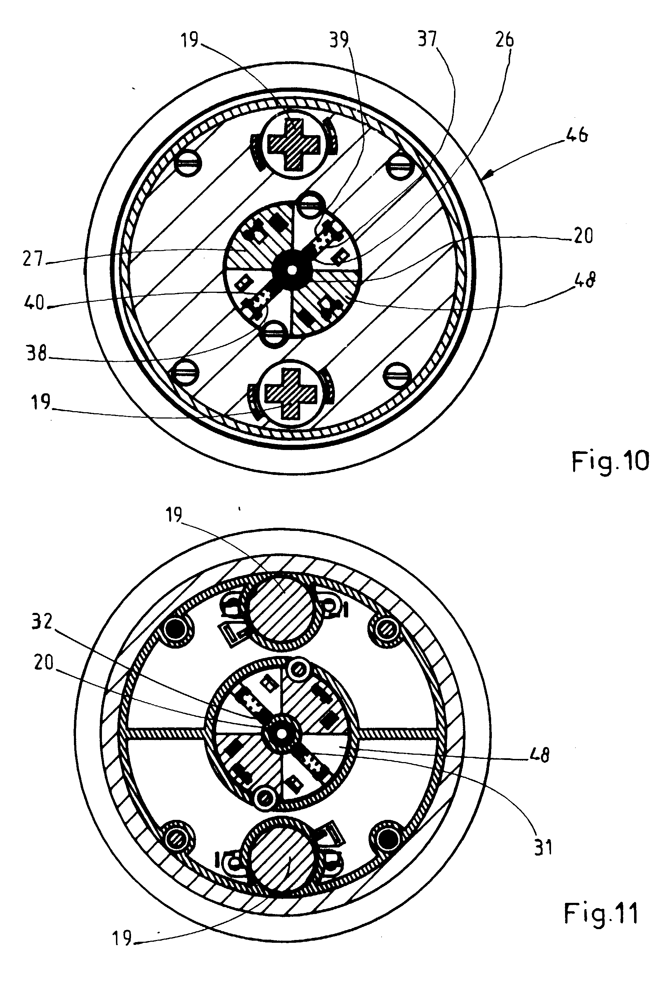

Sur la figure 10, correspondant à une coupe transversale selon le plan E-E de la figure 2, on distingue à nouveau les deux piles boutons constituant la source auxiliaire d'énergie 19, et dans le sous-ensemble central 48 on distingue les premiers conducteurs d'entrée 26 et 27 dans leurs logements radiaux de guidage 37 et 38 contenant les ressorts 39 et 40.

Sur la figure 11, correspondant à une coupe transversale selon le plan F-F de la figure 2, on distingue à nouveau les deux piles boutons formant la source auxiliaire d'énergie 19, et, dans le sous-ensemble central 48, les conducteurs de sortie 31 et 32 dans leurs logements radiaux de guidage respectifs munis de ressorts.

Le couvercle rapporté 46 est interchangeable. Il peut aisément être monté et démonté sur des moulinets divers sur lesquels un logement antérieur est prévu dans la bobine à cet effet. Il peut aussi être monté et démonté sur des réserves interchangeables de fil adaptables sur le moyeu antérieur d'un moulinet et permettant de choisir le fil approprié au type de pêche.

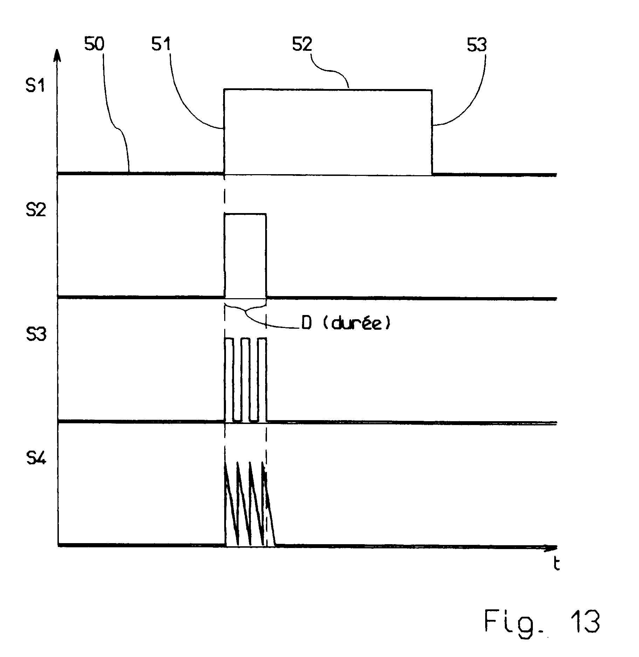

En se référant maintenant à la figure 13, on a représenté les formes d'onde des signaux S1, S2, S3 et S4.

Le signal électrique de rotation S1, en sortie du capteur de rotation relative 16, présente tout d'abord un palier bas 50 à potentiel faible correspondant au potentiel de la borne négative de la source auxiliaire d'énergie 19, puis un front de transition positive 51 suivi d'un palier haut 52 à potentiel plus élevé correspondant au potentiel de la borne positive de la source auxiliaire d'énergie 19, et enfin un front de transition négative 53 pour retourner au potentiel inférieur. Le front de transition positive 51 correspond à l'instant où le conducteur de sortie 31 ou 32 vient au contact de la deuxième piste superficielle périphérique 22. Dans le mode de réalisation illustré sur les figures, la deuxième piste superficielle périphérique 22 comporte quatre créneaux. Il y a donc quatre fronts de transition positive 51 pour chaque tour de rotation de la bobine 6 par rapport à l'arbre support de bobine 7.

Comme illustré sur la figure 13, la bascule monostable 41 produit un signal d'excitation S2 de durée D à partir du front de transition positive 51. La durée D peut avantageusement être égale à 50 millisecondes environ.

L'oscillateur piloté 42 produit ensuite un signal électrique de sortie S3 à fréquence F audible pendant la durée D du signal d'excitation S2. La fréquence F peut avantageusement être de l'ordre de 2 à 4 kHz, de préférence voisine de 2 kHz qui constitue la zone de meilleure audition moyenne de l'homme.

L'amplificateur de signaux 43 met en forme les signaux électriques de sortie S3 pour produire des signaux amplifiés S4, d'amplitude augmentée, qui permettent une meilleure excitation des sources de signal lumineux 118 ou de signal sonore 117. Le signal amplifié S4 est un signal à la même fréquence F que le signal électrique de sortie S3, pendant la même durée D du signal d'excitation S2.

Au cours du fonctionnement, lorsque la bobine 6 est débrayée sur l'arbre support de bobine 7, une traction exercée sur le fil par un poisson provoque le dévidement progressif du fil de pêche hors de la bobine par la rotation de la bobine 6 autour de l'arbre support de bobine 7. Lors de cette rotation, le dispositif selon l'invention détecte la rotation et produit sur la diode électroluminescente 118 un signal lumineux sous forme de quatre impulsions de 50 millisecondes chacune pour chaque tour de bobine, et produit sur le transducteur piézo-électrique 117 un signal sonore à impulsions formé de trains d'onde d'une durée de 50 millisecondes et ayant une fréquence de 2 kHz environ. Le rapprochement plus ou moins grand des impulsions lumineuses ou sonores donne à l'utilisateur l'idée de la vitesse de dévidement du fil.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche, comprenant :
- un boîtier de moulinet (1), avec un mécanisme d'entraînement en rotation de tambour et un mécanisme d'entraînement en translation axiale alternative d'arbre sollicités par une manivelle (3),
- un arbre support de bobine (7), monté rotatif dans le boîtier de moulinet (1) et freiné en rotation par un frein arrière (5), et entraîné en translation axiale alternative (13) dans le boîtier de moulinet (1) par le mécanisme d'entraînement en translation axiale alternative d'arbre,
- une bobine (6) adaptée à l'extrémité antérieure (15) de l'arbre support de bobine (7),
- un tambour (11) de récupération de fil, sollicité en rotation par le mécanisme d'entraînement en rotation de tambour,
- des moyens d'accouplement débrayables (70, 71) de la bobine (6) sur l'arbre support de bobine (7), ayant un état embrayé dans lequel la bobine (6) est solidaire en rotation de l'arbre support de bobine (7), et ayant un état débrayé dans lequel la bobine (6) est libre en rotation par rapport à l'arbre support de bobine (7),
- un capteur de rotation relative (16), générant un signal électrique de rotation (S1) lors de la rotation relative de la bobine (6) par rapport à l'arbre support de bobine (7),
- un générateur électronique de signal sonore (17) et/ou lumineux (18) alimenté par une source auxiliaire d'énergie (19), et générant un signal perceptible par l'utilisateur à réception dudit signal électrique de rotation (S1),
caractérisé en ce que le capteur de rotation relative (16), la source auxiliaire d'énergie (19) et le générateur de signal sonore (17) et/ou lumineux (18) sont contenus dans un couvercle rapporté (46) interchangeable fermant la face frontale de la bobine (6).

2. Moulinet selon la revendication 1, caractérisé en ce que:
- l'arbre support de bobine (7) comprend un tronçon d'extrémité (20) ayant au moins deux pistes superficielles périphériques (21, 22) conductrices de l'électricité, isolées électriquement l'une de l'autre et connectées à des potentiels électriques distincts, et réparties en alternance dans une zone superficielle périphérique d'interface (120) selon le pourtour de l'arbre support de bobine (7),
- le capteur de rotation relative (16) de bobine comprend au moins un conducteur de sortie (31, 32) solidaire de la bobine (6), en contact glissant sur le pourtour de l'arbre support de bobine (7) dans la zone superficielle périphérique d'interface (120) occupée par les pistes superficielles périphériques (21, 22) conductrices en alternance, et captant alternativement les potentiels distincts des pistes superficielles périphériques (21, 22) conductrices lors d'une rotation relative de la bobine (6), constituant le signal électrique de rotation.

3. Moulinet selon la revendication 2, caractérisé en ce que :
- les bornes respectives positive (28) et négative (24) de la source auxiliaire d'énergie (19) électrique sont connectées respectivement à la première (21) et à la seconde piste superficielle périphérique (22) conductrice par l'intermédiaire de conducteurs d'entrée respectifs (26, 27 ; 30) en contact glissant avec une zone périphérique continue (121, 122) de la piste superficielle périphérique (21, 22) conductrice respective,
- le conducteur de sortie (31, 32) est connecté à l'entrée du générateur électronique de signal sonore (17) et/ou lumineux (18).

4. Moulinet selon la revendication 3, caractérisé en ce que les premiers conducteurs d'entrée (26, 27) et de sortie (31, 32) en contact glissant avec l'arbre support de bobine (7) comprennent chacun une bille conductrice de l'électricité, libre en rotation et guidée en coulissement dans des logements radiaux de guidage (37, 38) de la bobine (6), et sollicitée par des moyens élastiques (39, 40) en appui sur la surface périphérique extérieure de l'arbre support de bobine (7).

5. Moulinet selon l'une quelconque des revendications 1 à 4, caractérisé en ce que le capteur de rotation relative (16) produit un signal électrique de rotation (S1) présentant des fronts de transition (51, 53) lorsque la bobine (6) atteint certaines positions angulaires déterminées autour de l'arbre support de bobine (7), et le générateur électronique de signal sonore (17) et/ou lumineux (18) produit des signaux perceptibles pendant une durée (D) déterminée après réception de certains au moins des fronts de transition.

6. Moulinet selon la revendication 5, caractérisé en ce que le générateur électronique de signal sonore (17) et/ou lumineux (18) comprend :
- une bascule monostable (41) générant un signal d'excitation (S2) de durée déterminée (D) à réception d'un front de transition positive (51) du signal électrique de rotation (S1) reçu du capteur de rotation relative (16),
- un oscillateur piloté (42), générant un signal électrique de sortie (S3) à fréquence (F) audible pendant la durée (D) du signal d'excitation (S2) reçu de la bascule monostable (41),
- un amplificateur de signaux (43), mettant en forme les signaux électriques de sortie (S3) reçus de l'oscillateur piloté (42) et les transmettant à une source de signal lumineux (118) et/ou à une source de signal sonore (117).

7. Moulinet selon la revendication 6, caractérisé en ce que la source de signal lumineux (118) comprend au moins une diode électroluminescente disposée en périphérie de la bobine (6).

8. Moulinet selon l'une des revendications 6 ou 7, caractérisé en ce que la source de signal sonore (117) est un transducteur piézo-électrique à membrane oscillante logée dans une cavité frontale (44) ouverte de la bobine (6).
